# EUROPÄISCHE PATENTSCHRIFT

(11) **EP 1 979 216 B1**
(45) Veröffentlichungstag und Bekanntmachung des Hinweises auf die Patenterteilung: **13.01.2010**
(21) Anmeldenummer: 07703094.8
(22) Anmeldetag: 29.01.2007
(51) Int. Cl.: B62B 1/00, B62B 1/26, B62B 3/00, B62B 3/06

(54) **TRANSPORT- UND HEBEVORRICHTUNG FÜR GASFLASCHEN**
TRANSPORTING AND LIFTING APPARATUS FOR GAS CYLINDERS
DISPOSITIF DE TRANSPORT ET DE LEVAGE DE BOUTEILLES DE GAZ

(30) Priorität: 02.02.2006 DE 102006004740
(43) Veröffentlichungstag der Anmeldung: 15.10.2008
(73) Patentinhaber: Facility Service GmbH, 74072 Heilbronn (DE)
(72) Erfinder: WESLEY, James, Scherf, 74535 Mainhardt-Bubenorbis (DE); MÜLLER, Rolf, 74177 Bad Friedrichshall (DE)
(74) Vertreter: Koch Müller Patentanwaltsgesellschaft mbH
(86) Internationale Anmeldenummer: PCT/EP2007/000734
(87) Internationale Veröffentlichungsnummer: WO 2007/088017

(56) Entgegenhaltungen:
- FR-A1- 2 773 348
- US-A- 4 205 937
- US-A- 4 258 826
- US-A- 4 625 949
- US-A- 5 489 183
- US-A1- 2004 256 818

## Beschreibung

Die vorliegende Erfindung betrifft eine Transport- und Hebevorrichtung für Gasflaschen gemäß dem Oberbegriff des Patentanspruchs 1,

Beim Transport von Gasflaschen ist je nach Inhalt, vor allem bei Druckgasen, Sondergasen, Giftgasen und Flüssiggasen auf besondere technische Regeln und Vorschriften zu achten. Aus dem Stand der Technik sind zahlreiche Transportvorrichtungen für Gasflaschen, die dem sicheren und einfachen Transport dienen sollen, bekannt.

Aus der DE 297 04 996 U1 ist beispielsweise eine Transportvorrichtung bekannt, das ein Grundgestell mit einer Stützvorrichtung aufweist, so dass die Transportvorrichtung sowohl als Sackkarre als auch als Transportkarre mit Stützrad verwendet werden kann. Dabei ist die Stützvorrichtung schwenkbar am Grundgestell befestigt und muss je nach Verwendungsart der Transportvorrichtung zunächst ein- oder ausgeklappt und In der jeweiligen Position mittels Bolzen o_{.}ä_{.} arretiert werden.

Aus der Druckschrift US-A-5 489 183 ist eine gattungsgemäße Transportvorrichtung bekannt, mittels der schwere Lasten transportiert werden können. Die offenbarte Vorrichtung weist außerdem eine Hebevorrichtung auf, mittels derer Lasten gegenüber einem Grundgerüst anheben lassen. Weitere derartige Vorrichtungen sind auch den Druckschriften US-A-4 258 826, FR-A1-2 773 348, US-A-4 205 937, US 2004/256818 A1 und US-A-4 626 949 bekannt.

Aus der FR 2773348 ist ein Wagen zum Anheben und Transport von Gasflaschen bekannt, der eine Stütze aufweist, an der die Hebeeinrichtung und eine Radachse mit zwei Rädern befestigt sind. An der Stütze ist zusätzlich eine Stützeinrichtung aus zwei miteinander verbundenen Schenkeln angebracht, an deren äußeren Ende eine weitere Rolle befestigt ist. Zum Trans port wird der Wagen nach hinten geneigt, so dass die Stütze in einer schrägen Position ist und die hintere Rolle auf dem Boden aufsteht. Ein Transport der Gasflaschen in vertikaler Position auf zwei Rädern bzw. eine Nutzung des Wagens als Sackkarre ist nicht vorgesehen. Nachteilig an dieser Ausführung ist, dass der Wagen senkrecht zur Fahrtrichtung nur eine geringe Steifigkeit aufweist und zudem aufgrund der kleinen Stützrolle kippgefährdet ist.

Aufgabe der Erfindung ist es daher unter Vermeidung vorgenannter Nachteile den sicheren und einfachen Transport und Hub von Gasflaschen zu gewährleisten.

Diese Aufgabe wird erfindungsgemäß durch eine Vorrichtung der eingangs genannten Art mit den Merkmalen des Patentanspruches 1 gelöst. Günstige Ausgestaltungsformen sind Gegenstand von Unteransprüchen.

Demnach besteht das Wesen der Erfindung in einer Transport- und Hebevorrichtung für Gasflaschen gemäß dem Anspruch 1. Dadurch kann die Transport- und Hebevorrichtung in senkrechter Position verschoben und rangiert werden ohne dass das Grundgestell gekippt werden muss. Hierdurch ist es möglich, eine Last oder Gasflasche stehend bis an den Zielort heranzufahren. Somit ist neben der Transportposition mit geneigtem Grundgestell, wobei die Vorrichtung sowohl als Sackkarre mit zwei Rädern als auch als Transportkarre mit Stützrad verwendet werden kann, eine dritte, senkrechte Position des Grundgestells gegeben, wodurch der Transport von sperrigen und gefährlichen Gütern den jeweiligen Gegebenheiten besonders gut angepasst werden kann.

Eine andere Ausgestaltung der Erfindung sieht vor, dass die beiden gegeneinander geneigten Schenkel der Stützvorrichtung mit dem Grundgestell jeweils einen Winkel von 30 bis 45° einschließen. Dadurch nimmt auch das Grundgestell bei der Verwendung der als Transportkarre mit Stützrad eine um 30 bis 45 ° gegenüber der Horizontalen geneigte Position ein, wodurch der Schwerpunkt der Vorrichtung nach unten wandert; hierdurch wird die Kippsicherheit der Vorrichtung maßgeblich erhöht. Weiterhin ist es durch die vorgesehene Neigung der Stützvorrichtung möglich, die Transport- und Hebevorrichtung als Sackkarre mit einer weniger geneigten Position des Grundgestells zu verwenden ohne dass das Stützrad oder die Stützvorrichtung insgesamt hindern.

Besonders vorteilhaft ist hierbei, wenn die beiden Schenkel der Stützvorrichtung beidseitig gelenkig gelagert und am Grundgestell einrastbar vorgesehen sind. Dadurch können die Neigung der Stützvorrichtung und der Platzbedarf geändert werden und die Höhe der Stützvorrichtung jeweils an die Gasflaschengröße angepasst werden. Dennoch bilden die beiden gegeneinander geneigten Schenkel, wenn sie am Grundgestell eingerastet sind, mit diesem immer einen stabilen dreiecksförmigen Körper, der für die Aussteifung und Stabilität der Transport- und Hebevorrichtung in Fahrtrichtung sorgt.

Gemäß einer vorteilhaften Weiterbildung der Erfindung ist an der Stützvorrichtung eine Achse mit zwei Rädern vorgesehen. Hierdurch wird die Standsicherheit bei einer Verwendung der Transport- und Hebeeinrichtung als Transportkarre mit Stützrad erhöht und eine Kippgefährdung bei unebenem Gelände verringert.

Eine vorteilhafte Ausgestaltung der Erfindung sieht zudem vor, dass für die Räder an der Stützvorrichtung ein Durchmesser vorgesehen ist, der mindestens so groß wie der Durchmesser der Räder am Grundgestell ist. Da der Raddurchmesser einen großen Einfluss auf die Laufeigenschaften der Transportvorrichtung auf unebenen Böden hat, ist es mit größeren Rädern leichter, Hindernisse zu überwinden. Weiterhin ist auch der Rollwiderstand bei einem großen Raddurchmesser geringer, so dass die Gasflaschen, die zwischen 90 und 120 kg wiegen, ergonomisch und mit wenig Kraftaufwand verschoben werden können.

Als besonders vorteilhaft hat sich erwiesen, rollen - oder kugelgelagerte Laufräder vorzusehen, da auch die Art und Größe des Lagers ist für den Rollwiderstand eines Rades von Bedeutung ist.

Gemäß einer Weiterbildung der Erfindung sind zudem an der auskragenden Lastfläche und/oder einer der Achsen Lenkrollen vorgesehen. Somit kann, wenn die Lenkrollen an der auskragenden Lastfläche und an der Radachse des Grundgestelles angebracht sind, die gesamte Transport- und Hebevorrichtung auf der Stelle gedreht werden. Dadurch kann diese ohne großen Kraftaufwand an den Ort herangefahren werden, an dem eine Gasflasche aufgenommen oder abgestellt werden soll.

Eine andere Ausgestaltung der Erfindung sieht vor, dass zur Verschiebung des Tragegestells entlang des Grundgestells eine selbst arretierende Seilwinde vorgesehen ist. Dadurch bleibt das Tragegestell auch in beladenem Zustand in jeder Höhenposition gesichert.

Als besonders vorteilhaft haben sich Griffe am Grundgestell erwiesen, die der jeweiligen Neigung des Grundgestelles im Transportfall entsprechend vorgesehen sind.

Eine weitere Ausgestaltung der Erfindung sieht zudem vor, dass wenigstens eine Feststellbremse vorgesehen ist. Dadurch kann die Transport- und Hebeeinrichtung in vertikaler und geneigter Position auch bei Unebenheiten im Gelände sicher abgestellt werden.

Gemäß einer vorteilhaften Weiterbildung der Erfindung sind am Grund- und/oder Tragegestell variable Befestigungsvorrichtungen für unterschiedliche Gasflaschengrößen vorgesehen sind.

Weiterhin sieht die Erfindung vor, dass Befestigungsvorrichtungen für den gleichzeitigen Transport von wenigstens drei Gasflaschen vorgesehen sind.

Eine andere Ausgestaltung der Transport- und Hebevorrichtung sieht zudem vor, dass am Grundgestell ein verschließbarer Behälter zur Aufnahme von Kleinteilen vorgesehen ist. Dieser ist so ausgebildet, dass er bei jeder Neigung des Grundgestells geöffnet werden kann ohne dass Teile herausfallen. Vorteilhaft ist dabei, dass Werkzeuge, die zum Anschluss oder Abklemmen der Gasflaschen benötigt werden, ohne zusätzlichen Aufwand mitgeführt werden können.

Eine Weiterbildung der Transport- und Hebevorrichtung sieht zudem vor, dass als Antrieb ein Elektromotor vorgesehen ist. Dieser kann sowohl für den Antrieb der Radachsen als auch als Antrieb für die Hubvorrichtung eingesetzt werden. Dadurch ist es möglich, die Vorrichtung ohne Kraftaufwand zu bedienen.

Anhand der Figuren soll die Erfindung näher beschrieben werden.
Fig. 1 zeigt eine Seitenansicht der Transport- und Hebevorrichtung in vertikaler Position
Fig. 2 zeigt eine Seitenansicht der Transport- und Hebevorrichtung in geneigter Position zur Verwendung als Sackkarre
Fig. 3 zeigt eine Seitenansicht der Transport- und Hebevorrichtung in maximal geneigter Position zur Verwendung als Transportkarre mit Stützrad
Fig. 4 zeigt eine Draufsicht auf die Transport- und Hebevorrichtung in maximal geneigter Position
Fig. 5 zeigt eine Draufsicht auf die Transport- und Hebevorrichtung in vertikaler Position

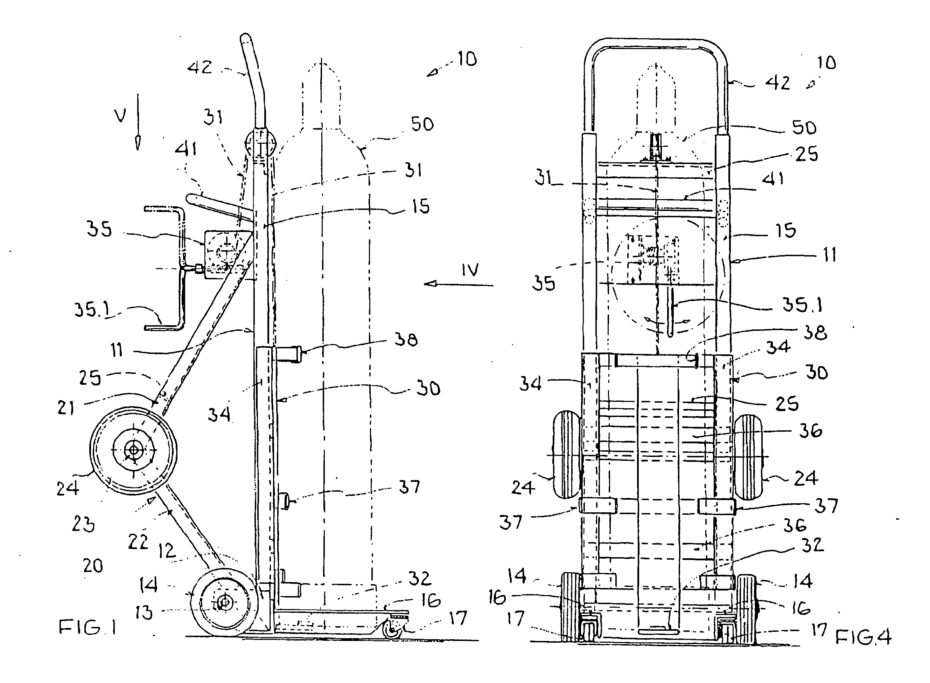

Fig. 1 zeigt eine Transport- und Hebevorrichtung 10 für Gasflaschen 50 in vertikaler Position. An einem Grundgestell 11, welches aus Stahlprofilen 15 besteht, ist mit Hilfe zweier Winkel 12 eine Radachse 13 mit zwei Rädern 14 befestigt. Weiterhin ist an jedem Stahlprofil 15 des Grundgestells 11 eine Stützvorrichtung 20 befestigt, die aus zwei Schenkeln 21, 22 besteht, die jeweils mit dem Grundgestell 11 einen Neigungswinkel zwischen 30 und 35 ° einschließen. Somit bilden die beiden Schenkel 21, 22 mit dem Grundgestell 11 jeweils einen steifen, dreiecksförmigen Rahmen. Im Schnittpunkt der beiden Schenkel 21, 22 ist eine weitere Radachse 23 mit zwei Rädern 24 angeordnet. Sowohl die Schenkel 21, 22 als auch die Stahlprofile 15 des Grundgestells 11 sind mittels Querstreben 25 verbunden, so dass auch in dieser Richtung eine aussteifende, rahmenartige Tragkonstruktion entsteht.
Weiterhin ist am Grundgestell 11 auf der gegenüberliegenden Seite der Stützvorrichtung eine Lastfläche 16 vorgesehen, die dafür sorgt, dass die Transport- und Hebevorrichtung im unbelasteten Zustand nicht kippt. Am äußeren Ende der Lastfläche 16 befindet sich wenigstens eine weitere Lenkrolle 17, die es ermöglicht, die Transport- und Hebevorrichtung in senkrechter Position zu verfahren. Dies wird beispielsweise erforderlich, wenn eine Gasflasche 50 auf ein Podest gehoben und dort abgestellt werden soll. Über ein Seil 31 ist zudem ein Tragegestell 30 an dem Grundgestell 11 verschieblich befestigt. Dazu besteht das Tragegestell 30 aus Profilen 34, die die Stahlprofile 15 des Grundgestells 11 klammerartig umschließen. Zum Anheben und Ablassen des Tragegestells 30 wird das Seil 31 über eine Seilwinde 35 am Grundgestell 11 mittels einer Kurbel 35.1 auf- bzw. abgewickelt, wodurch das Tragegestell 30 wie ein Schlitten entlang des Grundgestells 11 gleiten kann. Das Tragegestell 30 umfasst wenigstens einen Tragarm 32, auf dem Gasflaschen 50 aufgestellt werden können. Weiterhin sind die Profile 34 über Querstreben 36 miteinander verbunden. An den Querstreben 36 sind wiederum in verschiedenen Abständen Halterungen 37, 38 für die Befestigung von unterschiedlichen Gasflaschen 50 angebracht.

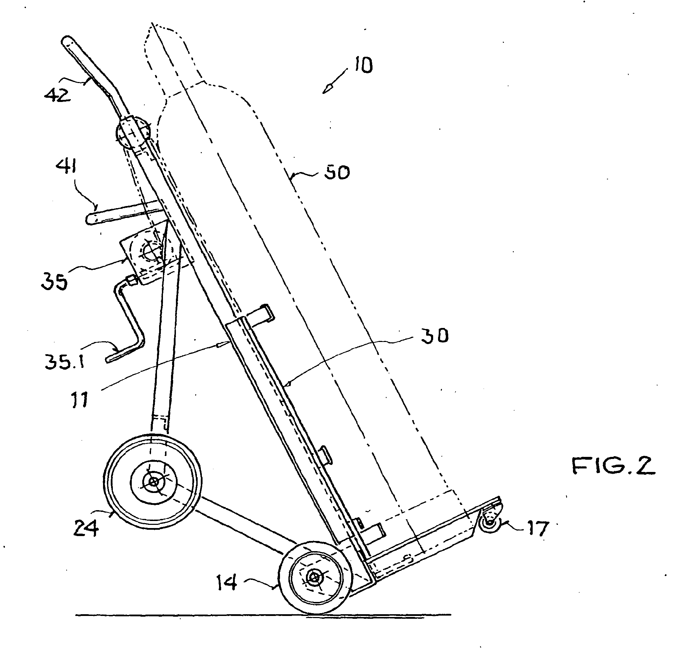

Fig. 2 zeigt eine Seitenansicht der Transport- und Hebevorrichtung 10 in geneigter Position zur Verwendung als Sackkarre. Dazu wird die Vorrichtung mit Hilfe des am Grundgestell 11 befestigten Griffs 41 nach hinten gekippt, so dass das gesamte Gewicht auf den beiden Rädern 14 lagert.

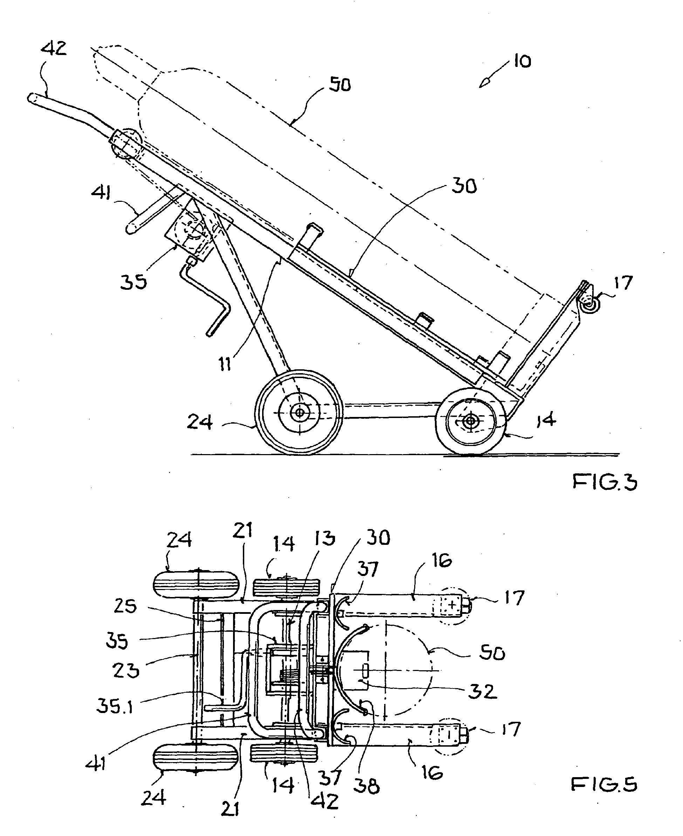

Fig. 3 zeigt eine Seitenansicht der Transport- und Hebevorrichtung 10 in maximal geneigter Position zur Verwendung als Transportkarre mit Stützrad. Die dargestellte Transport- und Hebevorrichtung 10 weist an der hinteren Achse 23 zwei Räder 24 auf, so dass diese auch in unebenem Gelände eine stabile und kippsichere Lage einnimmt.

Fig. 4 zeigt eine Draufsicht auf die Transport- und Hebevorrichtung 10 in maximal geneigter Position. Die obere Halterung 38 ist für eine große Gasflasche 50 und die beiden unteren Halterungen 37 sind für kleinere Gasflaschen vorgesehen, die gleichzeitig transportiert werden können.

## Patentansprüche

1. Transport- und Hebevorrichtung (10) für Gasflaschen (50), umfassend
• ein Grundgestell (11) mit
einer Radachse (13) und zwei Rädern (14)
und
einer mit einem weiteren Rad (24) versehenen Stützvorrichtung (20), wobei die Stützvorrichtung (20) zwei gegeneinander geneigte Schenkel (21, 22) umfasst, die mit dem Grundgestell (11) einen steifen Rahmen senkrecht zur Radachse des Grundgestells bilden;
und
• ein Tragegestell (30) zur Aufnahme der Gasflaschen (50), das mit dem Grundgestell (11) verschieblich verbunden ist, wobei die Verschiebung mittels einer am Grundgestell (11) angeordneten Winde (35) erfolgt, wobei
• Grundgestell (11) und Stützvorrichtung (20) jeweils in Rahmenbauweise vorgesehen sind und wobei an dem Grundgestell (11) wenigstens eine auskragende Lastfläche (16) vorgesehen ist,
**dadurch gekennzeichnet, dass**
• die auskragende Lastfläche (16) wenigstens ein Rad (17) aufweist.

2. Transport- und Hebevorrichtung (10) gemäß Anspruch 1, **dadurch gekennzeichnet, dass** die beiden gegeneinander geneigten Schenkel (21, 22) der Stützvorrichtung (20) mit dem Grundgestell (11) jeweils einen Winkel von 30 bis 45° einschließen.

3. Transport- und Hebevorrichtung (10) gemäß Anspruch 2, **dadurch gekennzeichnet, dass** die beiden Schenkel (21, 22) beidseitig gelenkig gelagert und am Grundgestell (11) einrastbar vorgesehen sind.

4. Transport- und Hebevorrichtung (10) gemäß einem der vorhergehenden Ansprüche, **dadurch gekennzeichnet, dass** an der Stützvorrichtung (20) eine Achse (23) mit zwei Rädern (24) vorgesehen ist.

5. Transport- und Hebevorrichtung (10) gemäß einem der vorhergehenden Ansprüche, **dadurch gekennzeichnet, dass** für die Räder (24) an der Stützvorrichtung (20) ein Durchmesser vorgesehen ist, der mindestens so groß wie der Durchmesser der Räder (14) am Grundgestell ist.

6. Transport- und Hebevorrichtung (10) gemäß einem der vorhergehenden Ansprüche, **dadurch gekennzeichnet, dass** rollen - oder kugelgelagerte Laufräder (14, 17, 24) vorgesehen sind.

7. Transport- und Hebevorrichtung (10) gemäß einem der vorhergehenden Ansprüche, **dadurch gekennzeichnet, dass** an der auskragenden Lastfläche (32) und/oder einer der Achsen (13, 23) Lenkrollen vorgesehen sind.

8. Transport- und Hebevorrichtung (10) gemäß einem der vorhergehenden Ansprüche, **dadurch gekennzeichnet, dass** zur Verschiebung des Tragegestells (30) entlang des Grundgestells (11) eine selbst arretierende Sellwinde (35) vorgesehen ist.

9. Transport- und Hebevorrichtung (10) gemäß einem der vorhergehenden Ansprüche, **dadurch gekennzeichnet, dass** für den Transportfall in vertikaler und/oder geneigter Position am Grundgestell (11) der jeweiligen Neigung des Grundgestelles entsprechende Griffe (41, 42) vorgesehen sind.

10. Transport- und Hebevorrichtung (10) gemäß einem der vorhergehenden Ansprüche, **dadurch gekennzeichnet, dass** wenigstens eine Feststellbremse vorgesehen Ist.

11. Transport- und Hebevorrichtung (10) gemäß einem der vorhergehenden Ansprüche, **dadurch gekennzeichnet, dass** am Grundgestell (11) und/oder Tragegestell (30) variable Befestigungsvorrichtungen (37, 38) für unterschiedliche Gasflaschengrößen vorgesehen sind.

12. Transport- und Hebevorrichtung (10) gemäß einem der vorhergehenden Ansprüche, **dadurch gekennzeichnet, dass** Befestigungsvorrichtungen (37, 38) für den gleichzeitigen Transport von wenigstens drei Gasflaschen (50) vorgesehen sind.

13. Transport- und Hebevorrichtung (10) gemäß einem der vorhergehenden Ansprüche, **dadurch gekennzeichnet, dass** am Grundgestell (11) ein verschließbarer Behälter zur Aufnahme von Kleintellen vorgesehen ist.

14. Transport- und Hebevorrichtung (10) gemäß einem der vorhergehenden Ansprüche, **dadurch gekennzeichnet, dass** als Antrieb ein Elektromotor vorgesehen Ist.

## Claims

1. Transporting and lifting device (10) for gas cylinders (50), comprising
- a base structure (11) with a wheel axle (13) and two wheels (14) and a support device (20) provided with a further wheel (24), wherein the support device (20) comprises two limbs (21, 22), which are inclined relative to one another and which form together with the base structure (11) a stiff frame perpendicular to the wheel axle of the base frame;
and
- a carrier structure (30), which is displaceably connected with the base structure (11), for reception of the gas cylinders (50), wherein the displacement takes place by means of a winch (35) arranged at the base structure (11), wherein
- base structure (11) and support device (20) are respectively provided in frame mode of construction and wherein at least one protruding load surface (16) is provided at the base structure (11),
**characterised in that**
- the protruding load surface (16) has at least one wheel (17).

2. Transporting and lifting device (10) according to claim 1, **characterised in that** the two limbs (21, 22), which are inclined relative to one another, of the support device (20) each include an angle of 30 to 45° with the base structure.

3. Transporting and lifting device (10) according to claim 2, **characterised in that** the two limbs (21, 22) are pivotably mounted on both sides and are provided to be detentable at the base structure (11).

4. Transporting and lifting device (10) according to any one of the preceding claims, **characterised in that** an axle (23) with two wheels (24) is provided at the support device (20).

5. Transporting and lifting device (10) according to any one of the preceding claims, **characterised in that** a diameter which is at least as large as the diameter of the wheels (14) at the base structure is provided for the wheels (24) at the support device (20).

6. Transporting and lifting device (10) according to any one of the preceding claims, **characterised in that** roller-mounted or ball-mounted running wheels (14, 17, 24) are provided.

7. Transporting and lifting device (10) according to any one of the preceding claims, **characterised in that** guide rollers are provided at the protruding load surface (32) and/or one of the axles (13, 23).

8. Transporting and lifting device (10) according to any one of the preceding claims, **characterised in that** a self-locking cable winch (35) is provided for displacing the carrier structure (30) along the base structure (11).

9. Transporting and lifting device (10) according to any one of the preceding claims, **characterised in that** handles (41, 42) corresponding with the respective inclination of the base structure (11) are provided at the base structure for the case of transport in vertical and/or inclined position.

10. Transporting and lifting device (10) according to any one of the preceding claims, **characterised in that** at least one parking brake is provided.

11. Transporting and lifting device (10) according to any one of the preceding claims, **characterised in that** variable fastening devices (37, 38) for different gas cylinder sizes are provided at the base structure (11) and/or carrier structure (30).

12. Transporting and lifting device (10) according to any one of the preceding claims, **characterised in that** fastening devices (37, 38) for simultaneous transport of at least three gas cylinders (50) are provided.

13. Transporting and lifting device (10) according to any one of the preceding claims, **characterised in that** a closable container for reception of items of hardware is provided at the base structure (11).

14. Transporting and lifting device (10) according to any one of the preceding claims, **characterised in that** an electric motor is provided as drive.

## Revendications

1. Dispositif de transport et de levage (10) de bouteilles de gaz (50), comprenant
• un support de base (11) présentant
un axe (13)de roues et deux roues (14)
et
un dispositif d'appui (20) présentant une roue supplémentaire (24), dispositif d'appui (20) présentant deux montants (21, 22) inclinés l'un vers l'autre qui forment avec le support de base (11) un cadre rigide perpendiculaire à l'axe de roues du support de base,
et
• un cadre porteur (30) pour recevoir les bouteilles de gaz (50), relié coulissant au support de base (11), le coulissement s'effectuant au moyen d'un treuil à câble monté sur le support de base (11),
• le support de base (11) et le dispositif d'appui (20) se présentant chacun sous la forme de cadre, et au moins une surface de charge (16) en débordement étant prévue sur le support de base (11),
**caractérisé en ce que :**
• la surface de charge (16) en débordement présente au moins une roue (17).

2. Dispositif de transport et de levage (10) selon la revendication 1, **caractérisé en ce que** les deux poteaux (21, 22) inclinés l'un vers l'autre du dispositif d'appui (20) forment chacun avec le support de base (11) un angle de 30 à 45°.

3. Dispositif de transport et de levage (10) selon la revendication 2, **caractérisé en ce que** les deux poteaux (21, 22) sont montés articulés de chaque côté et peuvent s'engager sur le support de base (11).

4. Dispositif de transport et de levage (10) selon l'une quelconque des revendications précédentes, **caractérisé en ce qu'**un axe (23) avec deux roues (24) est prévu sur le dispositif d'appui (20).

5. Dispositif de transport et de levage (10) selon l'une quelconque des revendications précédentes, **caractérisé en ce que** sur le dispositif d'appui (20) on prévoit un diamètre pour les roues (24) qui est au moins égal au diamètre des roues (14) du support de base.

6. Dispositif de transport et de levage (10) selon l'une quelconque des revendications précédentes, **caractérisé en ce que** l'on prévoit des roues de roulement (14, 17, 24) montées sur roulement à billes ou à rouleaux.

7. Dispositif de transport et de levage (10) selon l'une quelconque des revendications précédentes, **caractérisé en ce que** sur la surface de charge (32) en débordement et/ou sur l'un des axes (13, 23) on prévoit des rouleaux de guidage.

8. Dispositif de transport et de levage (10) selon l'une quelconque des revendications précédentes, **caractérisé en ce que** pour coulisser le cadre porteur (30) le long du support de base (11), on prévoit un treuil à câble (35) autobloquant.

9. Dispositif de transport et de levage (10) selon l'une quelconque des revendications précédentes, **caractérisé en ce que** pour le cas d'un transport en position verticale et/ou inclinée, on prévoit sur le support de base (11) des poignées (41, 42) correspondant à chaque inclinaison du support de base.

10. Dispositif de transport et de levage (10) selon l'une quelconque des revendications précédentes, **caractérisé en ce que** l'on prévoit au moins un frein d'immobilisation.

11. Dispositif de transport et de levage (10) selon l'une quelconque des revendications précédentes, **caractérisé en ce que** l'on prévoit sur le support de base (11) et/ou le cadre porteur (30) des dispositifs de fixation variables (37, 38) pour des bouteilles de gaz de dimensions différentes.

12. Dispositif de transport et de levage (10) selon l'une quelconque des revendications précédentes, **caractérisé en ce que** l'on prévoit des dispositifs de fixation (37, 38) pour le transport simultané d'au moins trois bouteilles à gaz (50).

13. Dispositif de transport et de levage (10) selon l'une quelconque des revendications précédentes, **caractérisé en ce que** l'on prévoit sur le support de base (11) un contenant obturable pour recevoir des petits accessoires.

14. Dispositif de transport et de levage (10) selon l'une quelconque des revendications précédentes, **caractérisé en ce que** le moyen d'entraînement est un moteur électrique.
